Europäisches Patentamt

European Patent Office

Office européen des brevets

(11) Veröffentlichungsnummer: **0 292 788**
A2

(12) **EUROPÄISCHE PATENTANMELDUNG**

(21) Anmeldenummer: 88107576.6

(22) Anmeldetag: 11.05.88

(51) Int. Cl.4: **F16D 55/22**

(30) Priorität: 23.05.87 DE 3717419

(43) Veröffentlichungstag der Anmeldung:
30.11.88 Patentblatt 88/48

(84) Benannte Vertragsstaaten:
DE ES FR GB

(71) Anmelder: **VOLKSWAGEN AKTIENGESELLSCHAFT**

D-3180 Wolfsburg(DE)

(72) Erfinder: **Langer, Paul**
**Leuschnerstrasse 1**
**D-3180 Wolfsburg 1(DE)**
Erfinder: **Degler, Bernward**
**Am Wehrgraben 5**
**D-3172 Isenbüttel(DE)**

(54) **Hydraulisch betätigbare Teilbelag-Scheibenbremse.**

(57)
1. Hydraulisch betätigbare Teilbelag-Scheibenbremse für Kraftfahrzeuge.

2.1 Bei bekannten Scheibenbremsen wird die Zuspannkraft der Bremse durch eine in einem Radbremszylinder axial verschiebbar gelagerte Kolbenanordnung erzeugt. Mit der neuen Teilbelag-Scheibenbremse soll bei gleicher Baugröße eine größere Zuspannkraft als sonst üblich erzeugt werden können.

2.2 Die Kolbenanordnung der neuen Teilbelag-Scheibenbremse enthält zu diesem Zweck zwei rückwirkungsfrei ineinander geschachtelte Kolben, die parallel zueinander auf denselben Bremsbelag und/oder das Zuspannorgan einwirken.

EP 0 292 788 A2

## Hydraulisch betätigbare Teilbelag-Scheibenbremse

Die Erfindung betrifft eine hydraulisch betätigbare Teilbelag-Scheibenbremse, insbesondere für Kraftfahrzeuge, der im Oberbegriff des Patentanspruchs 1 genannten Art, wie sie allgemein bekannt ist, beispielsweise auch aus der DE-PS 29 19 534.

Von einer solchen bekannten Teilbelag-Scheibenbremse ausgehend, liegt der Erfindung nun die Aufgabe zugrunde, diese so auszubilden, daß sich eine besonders kompakte, bauraum- und gewichtsparende Bauform egibt oder aber bei etwa gleichbleibender Baugröße eine im Vergleich zu bisher bekannten Anordnungen größere Bremskraft erzeugen läßt.

Diese Aufgabe wird erfindungsgemäß durch die Merkmale des Patentanspruchs 1 gelöst.

Vorteilhafte Ausgestaltungen und Weiterbildungen der Erfindung sind in den Unteransprüchen angegeben.

Erfindungsgemäß sind also im Radbremszylinder der Teilbelag-Scheibenbremse zwei Einzelkolben angeordnet, die rückwirkungsfrei ineinander geschachtelt sind und parallel zueinander auf denselben Bremsbelag bzw. das Zuspannorgan der Bremsscheibe einwirken.

Teilbelag-Scheibenbremsen mit zwei im Radbremszylinder angeordneten Kolben sind an sich bekannt.

So zeigt und beschreibt die DE-OS 15 55 569 eine Teilbelag-Scheibenbremse in Form einer Schwimmrahmen-Scheibenbremse, bei der im Radbremszylinder zwei ineinander geschachtelte und zum benachbarten Bremsbelag hin offene topfförmige Kolben ineinander geschachtelt sind. Bei dieser Bremse bilden die beiden Kolben jedoch einen Doppelkolben, zwischen deren Topfböden die bremsflüssigkeitsgefüllte Druckkammer gebildet ist und von denen der eine mit seinem Topfrand auf den benachbarten Bremsbelag und der andere mit seinem Topfboden auf den Schwimmrahmen der Scheibenbremse einwirkt; die Höhe der Zuspannkraft ist dabei durch die Größe der Kolbenbodenfläche und die Höhe des in der Druckkammer herrschenden Bremsflüssigkeitsdrucks bestimmt.

Aus der DE-OS 20 63 176 ist eine andere Teilbelag-Scheibenbremse mit zwei im Radbremszylinder angeordneten Kolben bekannt. Diese bekannte Teilbelag-Scheibenbremse ist speziell für eine Zweikreis-Bremsanlage geschaffen. Die beiden Kolben werden dabei mit der Bremsflüssigkeit beider voneinander unabhängigen Bremskreise druckbeaufschlagt wobei sich der eine Kolben wirkungsmäßig zum Teil auf dem anderen Kolben abstützt.

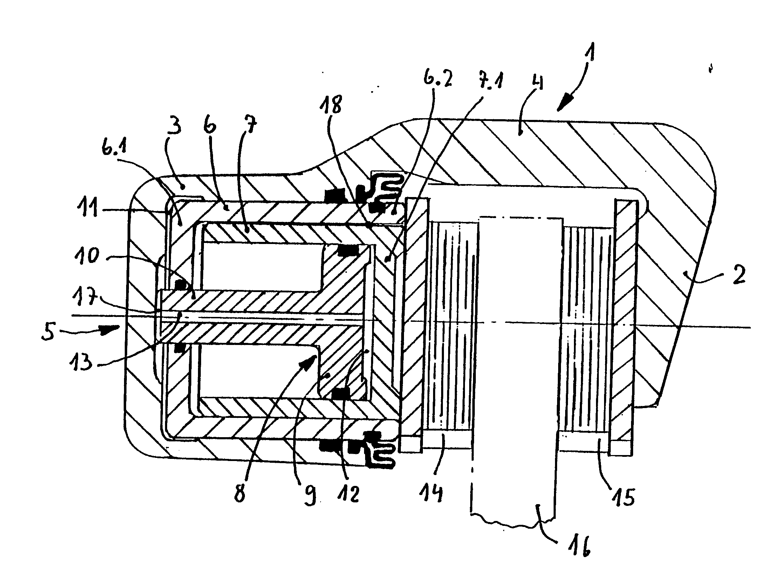

Anhand eines in der Zeichnung dargestellten Ausführungsbeispieles wird die Erfindung nachstehend näher erläutert.

Die einzige Figur der Zeichnung zeigt in geschnittener Darstellung einen Teilausschnitt einer Teilbelag-Scheibenbremse gemäß der Erfindung.

Dargestellt ist lediglich der für das Verständnis der Erfindung notwendige Teil der Teilbelag-Scheibenbremse, nämlich der Bereich, in dem die Zuspannkräfte der Scheibenbremse erzeugt und aufgebracht werden.

Das dargestellte Ausführungsbeispiel zeigt eine Teilbelag-Scheibenbremse des Schwimmsattel-Typs, d. h. eine Scheibenbremse, bei welcher der eine der beiden Bremsbeläge nicht unmittelbar vom Radbremszylinder, sondern über eine - schwimmend gelagerten, d. h. zur Bremsscheibe axial relativ bewegbaren Schwimmrahmen oder Bremssattel kraftbeaufschlagt wird.

Der im Querschnitt etwa U-förmige Bremssattel 1 ist in z. B. aus der DE-PS 29 19 534 bekannter Weise auf Bolzen eines nicht weiter dargestellten Bremsträgers, der auch Teil des Achsschenkels des zugeordneten Kraftfahrzeugrades sein kann, verschiebbar gelagert. Der die Bremsscheibe 16 axial übergreifende Bremssattel 1 besitzt einen radaußenseitigen Schenkel 2 und einen radinnenseitigen Schenkel 3, die über einen massiven Steg 4 miteinander verbunden sind. Im radinnenseitigen Schenkel 3 ist ein über einen nicht weiter dargestellten Bremsleitungsanschluß mit Bremsflüssigkeit beaufschlagbarer Radbremszylinder 5 angeordnet, in dem eine auf einen benachbarten Bremsbelag 14 wirkende Kolbenanordnung axial verschieblich gelagert ist. Der auf der gegenüberliegenden Seite der Bremsscheibe 16 angeordnete zweite Bremsbelag 15 stützt sich am radaußenseitigen Schenkel 2 ab.

Die Kolbenanordnung weist einen axial verschieblich unmittelbar im Radbremszylinder 5 gelagerten ersten Kolben 6 auf, der topfförmig ausgebildet ist und mit seinem zylindrischen Topfrand 6.2 am Bremsbelagträger des benachbarten Bremsbelages 14 anliegt. Zwischen seinem Topfboden 6.1 und dem Gehäuse des Radbremszylinders 5 ist dabei eine erste Druckkammer 11 gebildet, die über den nicht weiter dargestellten Bremsleitungsanschluß mit Bremsflüssigkeit beaufschlagt wird.

Im Topfinnern des ersten Kolbens 6 ist axial verschieblich ein zweiter Kolben 7 gelagert, der ebenfalls toppförmig ausgebildet ist, räumlich jedoch entgegengesetzt zum ersten Kolben ausgerichtet ist, nämlich so, daß er mit seinem Topfboden 7.1 am Bremsbelagträger des Bremsbelags 14 anliegt.

Zur Entlüftung des Topfinnern des Kolbens 7 ist dessen Außenumfang oder der Innenumfang des ersten Kolbens 6 mit mindestens einem entlang der Mantellinie verlaufenden Entlüftungsschlitz 18 versehen.

Im Topfinnern des zweiten Kolbens 7 ist ein aus Stempelschaft 10 und tellerförmigen Stempelkopf 9 bestehender Stützstempel 8 angeordnet, dessen Stempelkopf 9 dem Topfboden 7.1 des zweiten Kolbens 7 zugekehrt ist. Der Stempelschaft 10 ist durch den Topfboden 6.1 des ersten Kolbens 6 - gedichtet -hindurchgeführt und am Gehäuse des Radbremszylinders 5 abgestützt. Der tellerförmige Stempelkopf 9 liegt seinerseits umfangsgedichtet an der Topfinnenwand des zweiten Kolbens 7 an, so daß zwischen Stempelkopf 9 und Topfboden 7.1 des zwieten Kolbens 7 eine zweite Druckkammer 12 gebildet ist. Diese steht über eine im Stempelschaft 10 verlaufende Axialbohrung 13 mit einem Bremsleitungsanschluß in Verbindung.

Im daragestellten Ausführungsbeispiel mündet die Axialbohrung 13 in der ersten Druckkammer 11, wobei der Stempelschaft 10 stirnseitig mit mindestens einer Quernut 17 versehen ist. Die zweite Druckkammer 12 steht somit also mit dem gleichen Bremsleitungsanschluß in Verbindung wie die erste Druckkammer 11.

Die von der Kolbenanordnung der Teilbelag-Scheibenbremse erzeugte Zuspannkraft setzt sich aus einer vom ersten Kolben 6 erzeugten ersten Teilkraft und einer vom zweiten Kolben 7 erzeugten parallel wirkenden zweiten Teilkraft zusammen. Da die beiden Kolben 6 und 7 in geschickter Weise völlig rückwirkungsfrei ineinander geschachtelt sind, wird bei gleicher Baugröße des Radbremszylinders 5 und bei gleich hohem Bremsflüssigkeitsdruck eine wesentlich höhere Zuspannkraft erzeugt als sonst üblich; es ist leicht erkennbar, daß nämlich infolge der besonderen Schachtelung der beiden Kolben eine wesentlich größere Kolbenfläche mit Bremsflüssigkeit beaufschalgt wird als bei den bekannten Anordnungen. Einerseits wird in der ersten Druckkammer 11 eine Ringfläche des Topfbodens 6.1 des ersten Kolbens druckbeaufschlagt, deren Größe von der Durchmesserdifferenz des Topfbodens 6.1 und des Stempelschafts 10 bestimmt ist. Andererseits wird in der zweiten Druckkammer 12 zusätzlich der Topfboden 7.1 des zweiten Kolbens 7 druckbeaufschlagt; hier wird eine Ringfläche wirksam, deren Größe etwa durch die Durchmesserdifferenz zwischen Stempelkopf 9 und Axialbohrung 13 bestimmt ist.

Das erfindungsgemäße Konstruktionsprinzip bietet dem Bremsenkonstrukteur die Möglichkeit, nach Bedarf entweder unter Beibehaltung der Zuspannkraft die Scheibenbremse platz- und gewichtssparender zu bauen oder aber unter Beibehaltung der ursprünglichen Baugröße eine höhere Zuspannkraft (mit gleichem Bremsflüssigkeitsdruck) zu erzeugen, was eine Verringerung der Bremspedalkraft bedeutet und letztlich in vielen Fällen dazu führen kann, daß der Einsatz eines Bremskraftverstärkers nicht mehr notwendig ist.

Grundsätzlich wäre es auch denkbar, die beiden Druckkammern 11 und 12 nicht über einen gemeinsamen, sondern über zwei voneinander getrennte Bremsleitungsanschlüsse mit Bremsflüssigkeit zu beaufschlagen, was ermöglichen würde, die Scheibenbremse im Rahmen einer Zweikreisbremsanleitung mit dem Bremsdruck beider Bremskreise zu beaufschlagen. In einem solchen Falle dürfte natürlich keine Verbindung zwischen der Axialbohrung 13 des Stempelschafts 10 und der ersten Druckkammer 11 bestehen, d. h. die Axialbohrung 13 müßte - gegen die erste Druckkammer gedichtet - durch das Gehäuse des Radbremszylinders 5 nach außen geführt werden.

## Ansprüche

1. Hydraulisch betätigbare Teilbelag-Scheibenbremse, insbesondere für Kraftfahrzeuge, enthaltend einen über mindestens einen Bremsleitungsanschluß mit Bremsflüssigkeit beaufschlagbaren Radbremszylinder, eine in diesem axial verschieblich gelagerte Kolbenanordnung sowie auf einander gegenüberliegenden Seiten einer drehbaren Bremsscheibe angeordnete Bremsbeläge, welche bei Betätigung der Bremsanlage direkt durch die Kolbenanordnung und/oder indirekt über ein Zuspannorgan (z. B. Schwimmrahmen, Bremssattel) an die Bremsscheibe anpreßbar sind, dadurch gekennzeichnet, daß die Kolbenanordnung zwei rückwirkungsfrei ineinander geschachtelte Kolben (6, 7) enthält, die parallel zueinander auf denselben Bremsbelag (14) und/oder das Zuspannorgan (1) einwirken.

2. Scheibenbremse nach Anspruch 1, gekennzeichnet durch folgende Merkmale:

a) Die beiden Kolben (6, 7) sind topfförmig ausgebildet, wobei der erste Kolben (6) mit seinem zylindrischen Topfrand (6.2) und der im Topfinnern des ersten Kolbens (6) gelagerte zweite Kolben (7) mit seinem Topfboden (7.1) am benachbarten Bremsbelag (14) anliegen, und wobei zwischen dem Topfboden (6.1) des ersten Kolbens (6) und dem Gehäuse des Radbremszylinders (5) eine mit einem Bremsleitungsanschluß in Verbindung stehende bremsflüssigkeitsgefüllte erste Druckkammer (11) gebildet ist.

b) Im Topfinnern des zweiten Kolbens (7) ist ein Stützstempel (8) angeordnet, dessen den Topfboden (6.1) des ersten Kolbens (2) gedichtet durchdringender Stempelschaft (10) sich am Gehäuse des Radbremszylinders (5) abstützt und dessen dem Topfboden (7.1) des zweiten Kolbens (7) zugeordneter tellerförmiger Stempelkopf (9) umfangsgedichtet an der Topfinnenwand des zweiten Kolbens (7) anliegt, wobei zwischen Stempelkopf (9) und Topfboden (7.1) des zweiten Kolbens (7) eine bremsflüssigkeitsgefüllte zweite Druckkammer (12) gebildet ist, die über eine im Stempelschaft (10) verlaufende Axialbohrung (13) mit einem Bremsleitungsanschluß in Verbindung steht.

3. Scheibenbremse nach Anspruch 2, dadurch gekennzeichnet, daß die erste und die zweite Druckkammer (11, 12) jeweils mit einem eigenen Bremsleitungsanschluß in Verbindung stehen.

4. Scheibenbremse nach Anspruch 2, dadurch gekennzeichnet, daß die erste und die zweite Druckkammer (11, 12) mit dem gleichen Bremsleitungsanschluß in Verbindung stehen.

5. Scheibenbremse nach Anspruch 4, dadurch gekennzeichnet, daß die Axialbohrung (13) des Stempelschafts (10) in der ersten Druckkammer (11) mündet und die zwiete Druckkammer (12) über diese mit dem Bremsleitungsanschluß in Verbindung steht.

6.2 7.1 4 1

18

3 6 7

6.1

11

10

17

5

13

8 9 12 14 15

16

2

0 292 788

VOLKSWAGEN AG

K 4157/Z